# EUROPEAN PATENT APPLICATION

(11) **EP 2 172 864 A2**
(43) Date of publication of application: **07.04.2010**
(21) Application number: 09171179.6
(22) Date of filing: 24.09.2009
(51) Int. Cl.: G06F 21/00

(54) **Information-processing device and system for restricting use of such device**

(30) Priority: 26.09.2008 JP 2008249140; 26.09.2008 JP 2008249141
(71) Applicant: Toshiba TEC Kabushiki Kaisha, Tokyo 141-8664 (JP)
(72) Inventor: Fukushima, Takafumi, Shinagawa-ku, Tokyo 141-8664 (JP)
(74) Representative: Gendron, Vincent Christian

(57) **Abstract**

Schedule information including a user-specific ID and user occupying time period authorized to the user is stored in a device in advance. In a state that inputting from an input section of a device is inhibited, when wireless communications are carried out between an RFID module carried by an individual user and the device, a user ID associated with the user occupying time period including the current clock-time is acquired from the schedule information. Then, the acquired user ID is compared with an ID received from the RFID module. If the two IDs match, then the inputting inhibition is released based on the conformation of the two IDs.

## Description

### 1. Field of the invention

The present invention relates to an information-processing device that restricts user of the device and a use restricting system using the device.

### 2. Background of the Invention

As to a method for restricting users of office automation equipment, such as a personal computer and complex equipment, and operational equipment such as a POS terminal and credit-service terminal, there are known a method of performing user authentication using a user-specific ID and a password and a method of performing user authentication using biometrics information of a user. Recently, a method of restricting users by using an RFID is also known.

There is disclosed in Japanese patent publication No. 2931276 a user restricting system including an ID signal transmission unit and a use restriction release unit. Each of the users of the system carries an ID signal transmission unit, that is an aspect of an RFID module, and the use restriction release unit is provided in a device to which such user restriction is applied.

The ID signal transmission unit, provided with a transmitter and a receiver, transmits an ID code signal (ID) at a constant intensity. The use restriction release unit, also provided with a transmitter and a receiver, sends to the relative device a signal that releases the restriction of the use based on the ID code signal received by its receiver, and transmits a confirmation code signal having the identical code signal from its transmitter at a constant intensity.

If a distance between the relative two units are within a specified distance, the use restriction release unit is enabled to receive a signal from the ID signal transmission unit representing that the ID signal transmission unit has detected that the ID code signal received is its own. Upon receipt of this signal, the use restriction release unit transmits a confirmation code signal back to the ID signal transmission unit, and sends a use restriction release signal to an information processing apparatus. On the other hand, if a distance between the two units is more than the specified distance and thus a level of the signal to one unit from the other becomes lower than a predetermined level in the respective units, the use restriction release unit stops the transmission of the use restriction release signal.

Thus, if the distance between the relative two units is within the specified distance, the use restriction of the applicable device is released, while the use restriction becomes to function if the distance becomes more than the specified value.

In conventional use-restriction systems for information-processing devices using an RFID module, the use-restriction is released as long as that RFID module exists within a predetermined distance from a reader/writer provided in the information-processing device. Therefore, a problem arises that, for example, the device can be used by even a person illegally acquired that particular RFID module.

### SUMMARY OF THE INVENTION

The present invention has been made in view of the above circumstances. According to one aspect of the invention, there is provided an information-processing device capable of excluding use by persons illegally acquired the RFID module at a high probability and a system of restricting the use of this information-processing device.

According to the present invention, there is provided an information-processing device having an input section for processing information inputted through the input section, comprising: an input inhibition section inhibiting inputting from the input section; a schedule storage section storing schedule information including a user-specific ID for a user and user occupying time period authorized to the user; a wireless communication section communicating with an RFID module that is carried by each of the users and transmits the user-specific ID; a time-keeping section recording a current clock-time; a user ID acquisition section acquiring from the schedule storage section the user-specific ID associated with the user occupying time period including the current clock time recorded by the time-keeping section; an ID collation section, upon receipt of an ID from the RFID module by the wireless communication section, for collating the received ID with the user-specific ID acquired by the user ID acquisition section; and a use authorization section releasing the inputting inhibition as the result of the collation by the ID collation section.

According to another aspect of the invention, there is provided an information-processing device having an input section for processing information inputted through the input section, comprising: an input inhibition section inhibiting inputting from the input section; a wireless communication section communicating with an RFID module that is carried by each of the users and transmits information on an electronic ticket on which a user occupying time period authorized to the user is recorded; a time-keeping section recording a current clock-time; a ticket acquisition section wirelessly communicating with the RFID module through the wireless communication section to acquire the information of the electronic ticket stored in the RFID module; a use authorization section releasing the inputting inhibition when the clock-time recorded by the time-keeping section is included within the user occupying time period of the electronic ticket information acquired by the ticket acquisition section.

### BRIEF DESCRIPTION OF THE DRAWINGS

These and other objects and advantages of this invention will become apparent and more readily appreciated from the following detailed description of the presently preferred exemplary embodiments of the invention taken in conjunction with the accompanying drawings wherein:
FIG. 1 is a system configuration according to a first embodiment of the present invention;

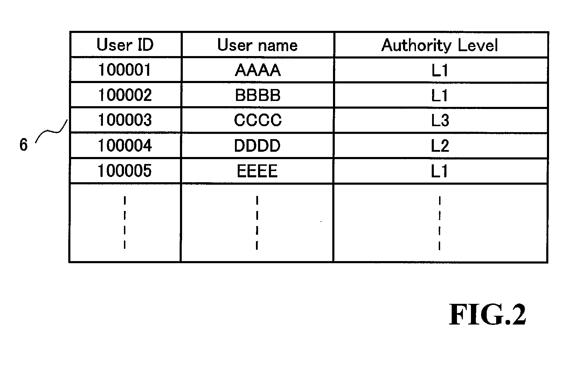

FIG. 2 is a data structure of a user database according to the first embodiment of the present invention;
FIG.3 is a data structure of a schedule database according to the first embodiment of the present invention;
FIG. 4 is an external view of an RFID module according to the first embodiment of the present invention;
FIG. 5 is a block diagram illustrating the principle part of the RFID module according to the first embodiment of the present invention;
FIG. 6 is a block diagram illustrating the principle part of an information-processing device according to the first embodiment of the present invention according to the embodiment of the present invention;
FIG. 7 is a flow chart illustrating the process procedure executed by a main control section of the information-processing device pertaining to a user restriction function according to the first embodiment of the present invention;
FIG. 8 is a flow chart illustrating the process procedure of operation by each level in reference to FIG. 7;
FIG. 9 is a flow chart illustrating the process procedure executed by a user recognition process section of the information-processing device pertaining to a user restriction function according to the first embodiment of the present invention;
FIG. 10 is a timing diagram used for a description of one application according to the first embodiment of the present invention;
FIG. 11 is a system configuration according to the second embodiment of the present invention;
FIG. 12 is a schematic diagram illustrating a data structure of a user database according to the second embodiment of the present invention;
FIG. 13 is a block diagram illustrating the principle part of an RFID module according to the second embodiment of the present invention;
FIG. 14 is a block diagram illustrating the principle part of an information-processing device according to the second embodiment of the present invention according to the embodiment of the present invention;
FIG. 15 is a flow chart illustrating the process procedure executed by an admission management device of the information-processing device pertaining to a user restriction function according to the second embodiment of the present invention;
FIG. 16 is an illustration showing an example of a position of electronic ticket information issued by a ticket-issuing device according to the second embodiment of the present invention;
FIG. 17 is a flow chart illustrating the process procedure executed by a ticket inspection section of the information-processing device pertaining to a user restriction function according to the second embodiment of the present invention; and
FIG. 18 is a flow chart illustrating the process procedure executed by a main control section of the information-processing device pertaining to a user restriction function according to the second embodiment of the present invention.

### DETAILED DESCRIPTION OF THE INVENTION

Preferred embodiments of the present invention will now be described in more detail with reference to the accompanying drawings. However, the same numerals are applied to the similar elements in the drawings, and therefore, the detailed descriptions thereof are not repeated.

This embodiment exemplifies a configuration in which the use of more than one information-processing device shared by several persons is restricted.

### [First Embodiment]

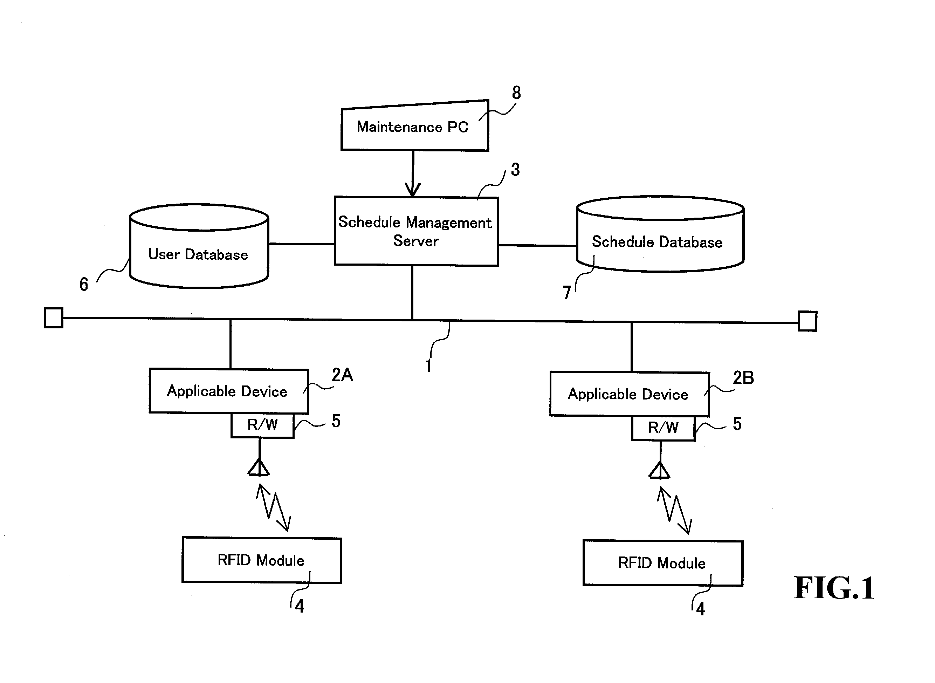

FIG. 1 illustrates an overall view of a system according to the present embodiment.

A plurality of devices and a schedule management server 3 are interconnected via a communications line 1 such as a LAN (Local Area Network). Although FIG. 1 shows, as an example, two sets of information-processing devices 2A and 2B, connection of three or more information-processing devices are allowed, as well. Each of the information-processing devices is provided with a wireless reader/writer 5 as a wireless communication means that wirelessly communicates with an RFID module 4.

Schedule management server 3 controls a user database 6 and a schedule database 7. In user database 6, there are registered user data including a user ID, a user name, and an authority level. Each user is allocated with a specific user ID. Also, an authority level is given to each user based on one' s position, career, and the number of years of working experience. Information processing device 2 is capable of processing information pertaining to more than one type of operation, and each operation type is ranked. The user is allowed to conduct information process pertaining to only an operation or operations to each of which a rank is assigned equal to or lower than an authority level of a user.

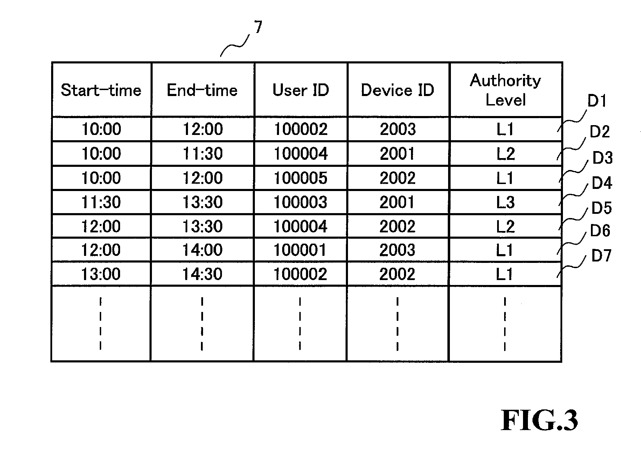

In the schedule database 7, as illustrated in FIG. 3, there are schedule data comprised of start-time, end-time, a user ID, a device ID, and an authority level. Each of the information-processing devices 2 is allocated with a specific ID. With respect to a user who is authorized to use information-processing device 2 identified by this device ID, a schedule data is formed from that user's ID and authority level, a device ID of the device authorized to the user for use, and start and end-time s of a corresponding user occupying time period.

In this embodiment, schedule database 7 stores a schedule data of one day. To store a schedule data of more than one day, only date information is added to the data.

The user data registered in user database 6 and the schedule data registered in schedule database 7 can be added, altered, and deleted through a maintenance PC 8 as needed.

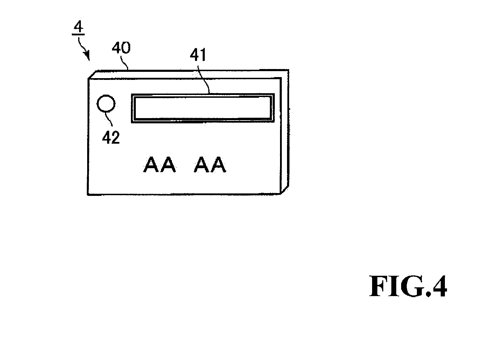

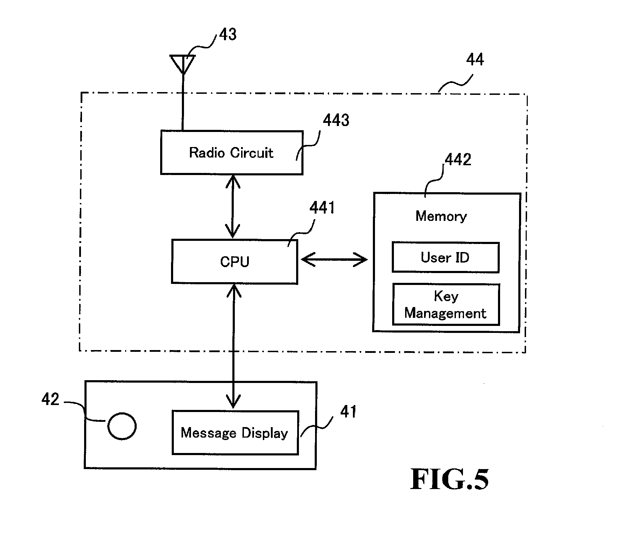

RFID module 4 is formed so that the user can carry it at all times. RFID module 4 is configured so as to be easily carried by the users, for example, by being embedded into a user's name plate. FIG. 4 shows an external view of RFID module 4 as an example. FIG. 5 is also an example of a block diagram of RFID module 4. In this example, RFID module 4 is provided with a message display device 41 and a LED display device 42 on the surface of a card-like main body 40 on which a user name (AA AA) is recorded. Main body 40 internally mounts an antenna 43 and an IC chip 44. IC chip 44 incorporates a CPU 441, a nonvolatile memory 442, and a radio circuit 443. Memory 442 provides a user ID area wherein user-specific IDs of users who use RFID module 4 are stored and a key management area wherein an encryption key and a decryption key are stored.

Radio circuit 443 has a power generation section, a demodulation section, and a modulation section. The power generation section supplies a power to each of the sections of IC chip 44 by rectifying and smoothing a radiowave received by antenna 43. The demodulation section demodulates the radiowave received by antenna 43 to send to CPU 441. The modulation section modulates data sent from CPU 441 into a radiowave to have it radiated from antenna 43. RFID module 4 is a so-called passive type.

CPU 441 writes data demodulated by the demodulation section of radio circuit 443 to memory 442. CPU 441, and also reads data from memory 442 and sends it to the modulation section of radio circuit 443. CPU 441 also controls the display of message display device 41 and LED display device 42.

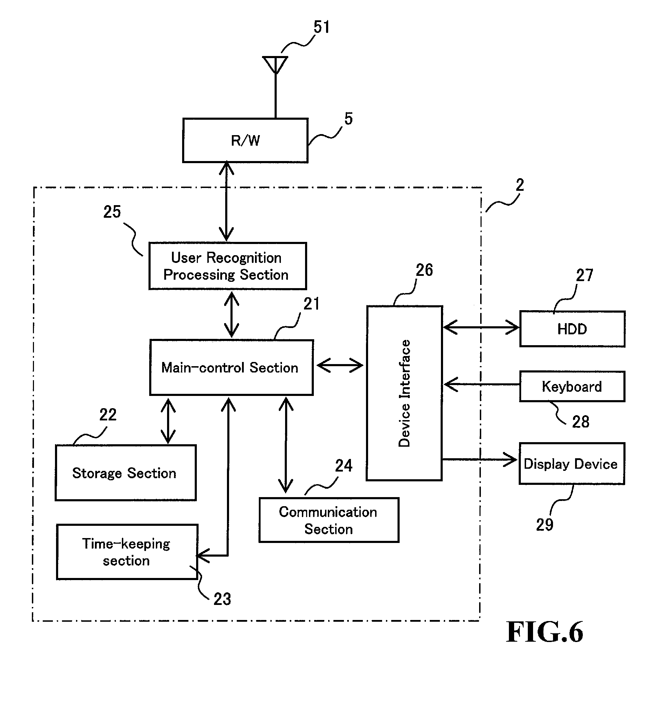

The respective applicable devices 2 (2A, 2B, ...) have basically the same structure. A structure of its principle part is shown in FIG. 6. As illustrated, each information-processing device 2 includes a main-control section 21, a storage section 22, a time-keeping section 23, a communication section 24,a user recognition process section 25, and a device interface 26. Connected to device interface 26 are various peripheral devices including an HDD (Hard Disk Drive) drive 27, a keyboard 28, a display 29. A wirelessly communicable reader/writer 5 is connected to user recognition process section 25. Communication section 24, connected to LAN 1, performs data-communications with schedule management server 3 that is also connected to this LAN1. Time keeping section 23 records current date and clock-time (time-keeping section). Storage section 22, composed of a ROM (Read only Memory) and a RAM (Random Access Memory), functions as a storage area for programs and various data. Main-control section 21, composed mainly of a CPU (Central Processing Unit), controls the respective sections according to preset programs.

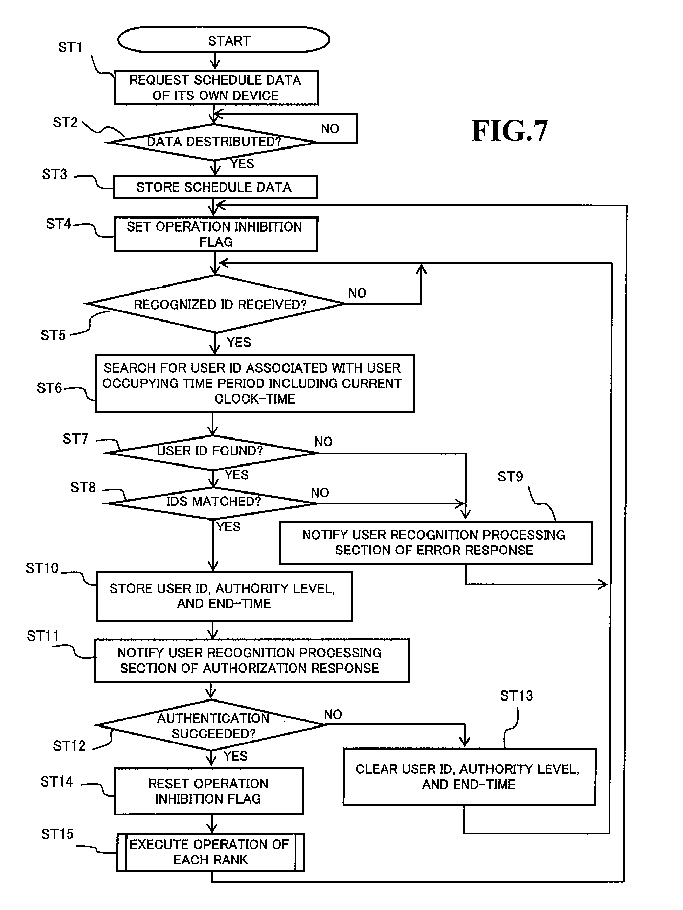

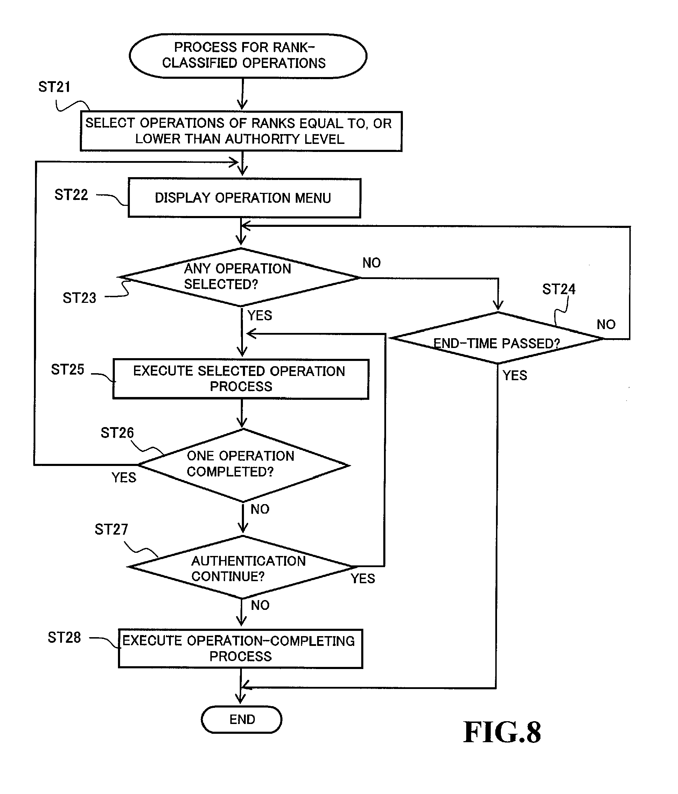

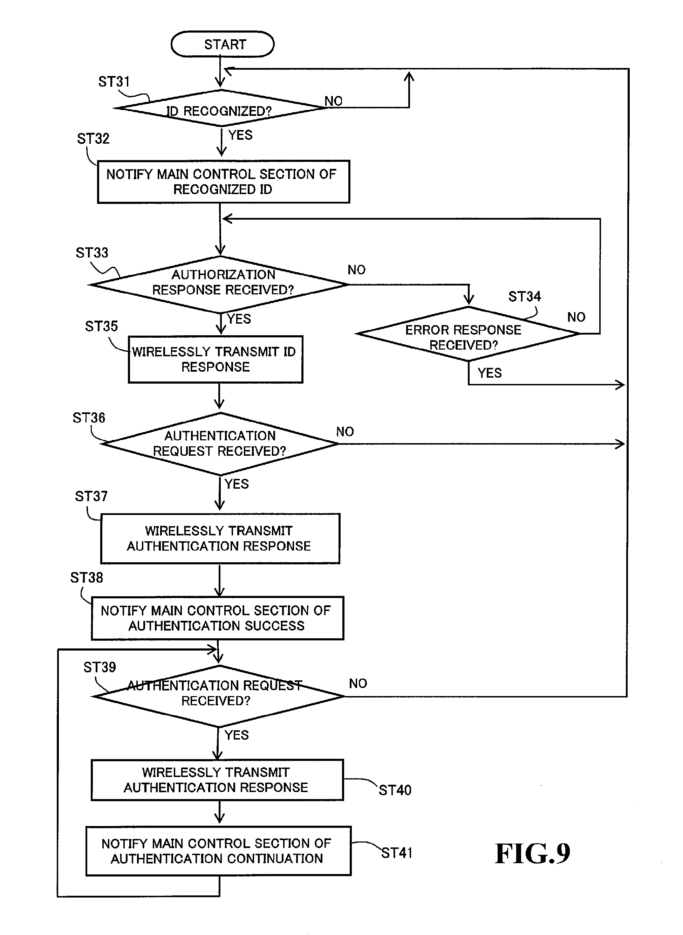

In this embodiment, main-control section 21 controls the respective sections according to the operations procedure illustrated in the flowcharts of FIGS. 7 and 8. Relating to the operations, user recognition process section 25 executes the operations procedure illustrated in the flowchart of FIG. 9. The use restricting function of information-processing device 2 will be described below in reference to these flowcharts.

Upon initiation of a certain device 2, the main-control section 21 commences the operations of the process procedure illustrated in the flowchart of FIG. 7. Hereinafter, the description will be made using information-processing device 2A. First, in step ST1, the main-control section 21 sends a request command for requesting schedule data of its own device (2A) to schedule management server 3, which is connected the device via LAN1, through communication section 24 (schedule request section).

This request command requesting the above schedule data includes a device ID that was previously assigned to that own device (2A). Schedule management server 3 searches a schedule database 7 with respect to the device ID in the received command, and extracts all of the schedule data containing the relative device ID. Then, the schedule data is delivered to the device 2A of the request source via LAN1 (schedule delivery section).

Main-control section 21 of the relative device 2A, which has sent the above request command, waits for the schedule data being sent from schedule management server 3 in ST2. Having acquired the schedule data from schedule management server 3 through communication section 24 (YES, in ST2), main-control section 21 generates a schedule data file in which that schedule data is arranged in the order from the earliest starting time, and stores the file in storage section 22 in ST3 (schedule storage section). This schedule data is stored in storage section 22 as a schedule data file arranged with, e.g. operation start-time in the order from the earlier clock-time.

Next, main-control section 21 sets an operation inhibition flag in ST4. The operation inhibition flag is stored, for example, in storage section 22. With the operation inhibition flag being set, main-control section 21 prohibits inputting from the input section that includes a keyboard 28, a pointing device, a scanner, and a touch panel, among the peripheral devices connected to device interface 26 (input inhibition means).

On the other hand, with the information-processing device 2A initiated, user recognition process section 25 commences the operations of the process procedure illustrated in the flowchart in FIG. 9. First, in ST31, user recognition process section 25 determines whether a new user ID has been detected among the IDs of RFID module 4 being detected by reader/writer 5 in ST31.

Reader/writer 5 periodically radiates a radiowave for an inquiry from an antenna 51 thereof. If any of RFID module 4 resides within the reachable communication area 51 of this radiowave, the relative RFID module 4 having received this radiowave returns a response radiowave to reader/writer 5. This response radiowave contains a user ID stored in a memory 442 of the relative RFID module 4. Reader/writer 5 detects the user ID of the relative RFID module 4 from the response radiowave received by its antenna 51, and outputs the detected user ID to user recognition process section 25.

Having recognized a new user ID among the user IDs detected by reader/writer 5 (YES, in ST31), user recognition process section 25 notifies main-control section 21 of the new user ID to main-control section 21 in ST32.

The operation inhibition flag is set in ST4, and main-control section 21 waits for the user IDs being sent from user recognition process section 25 in ST5 in a state that inputting from the input section is inhibited. With the new user ID being notified (YES, inST5), main-control section 21 searches the aforementioned schedule data file with respect to the current clock-time recorded in time-keeping section 23 in ST6 and acquires the user ID from the schedule data associated with the current clock-time as user user's occupying time period. If more than one of schedule data associated with the current clock-time as user occupying time exist, each user ID is separately acquired from the respective user IDs (user ID acquisition section).

Main-control section 21 determines whether the user ID having reserved the current clock-time as its user's occupying time period has been acquired or not in ST7. If not acquired (NO, in ST7), the flow proceeds to the operation of ST9, wherein main-control section 21 notifies user recognition process section 25 of an error response. Thereafter, the flow returning to ST5, main-control section 21 waits for a new user ID. Such an event occurs when no data associated with the current clock-time as a user's occupying time period is registered in schedule database 7.

In the case that even one user ID having reserved the current clock-time as the user user's occupying time period could be acquired (YES, in ST7), main-control section 21 collates that acquired user ID with the user ID notified from user recognition process section 25 in ST8 (collation section). As a result, if any user ID that conforms to the user ID notified from user recognition process section 25 is not acquired from the schedule data file (NO, in ST8), the flow proceeds to ST9, wherein main-control section 21 notifies user recognition process section 25 of an occurrence of an error. Thereafter, the flow returns to ST5, wherein main-control section 21 waits for a new user ID being notified. This event occurs when a person other than the user having reserved the current clock-time as occupying time period approaches to that particular information-processing device.

If any user ID that conforms to the user ID notified from user recognition process section 25 is acquired from the schedule data file (YES, in ST8), main-control section 21 stores the relative user ID, authority level, and end-time in storage section 22 in ST10. Also, main-control section 21 notifies user recognition process section 25 of an authorization response in ST11.

Then, main-control section 21 waits for a recognition success command being received from user recognition process section in ST12. When main-control section 21 fails to receive the recognition success command within a prespecified time (NO, in ST12), in ST13 main-control section 21 clears the user ID, authority level, and end-time that were stored in storage section 22. Thereafter, the flow returns to ST5, wherein main-control section 21 waits for a new user ID being notified.

When received the recognition success command within a prespecified time (YES, in ST12), main-control section 21 resets the operation inhibition flag in ST14. As a result, the state of inhibition of inputting from the input section including keyboard 28, pointing device, scanner, touch panel is released (use authorization section).

After notifying main-control section 21 of the new user ID in ST32, user recognition process section 25 waits for a response from main-control section 21 in ST33 or in ST34. Herein, when user recognition process section 25 received an error response from main-control section 21 (YES, in ST34), the flow returns to ST31, wherein user recognition process section 25 waits for a new ID being recognized.

On the contrary, when received a notification of authorization response frommain-control section 21 (YES, in ST33), user recognition process section 25 has an ID response command for the ID recognized as a new user ID wirelessly sent out in ST35. Thereby, the ID command is radiated from reader/writer 5 as a radiowave. At this time, if RFID module 4 having as the corresponding user ID as its ID exists within the reach area of the radiowave, RFID module 4 receives the ID response command. The relative RFID module 4 received this ID response command wirelessly transmits an authentication request command to the reader/writer 5.

User recognition process section 25 determines whether that authentication request command is received from RFID module 4 of the destination of the ID response command in ST36. When received the authentication request command through reader/writer 5 (YES, in ST36), user recognition process section 25 has a authentication response command transmitted to the relative RFID module 4 of the transmission source of the authentication request command in ST37. User recognition process section 25 notifies main-control section 21 of the authentication success command in ST38.

The authentication response command is radiated from reader/writer 5 as a radiowave. At this time, if the RFID module 4 of the transmission source of the authentication request command exists within the reachable area of the radiowave, the authentication response command is received by the relative RFID module 4. The relative RFID module 4 received the authentication response command, wirelessly transmits the authentication request command again (to the reader/writer 5).

User recognition process section 25 determines whether it received the authentication request command from the relative RFID module 4 of the transmission destination of the authentication response command in ST 39. Having received the authentication request command through reader/writer 5 (YES, in ST39), user recognition process section 25 has the authentication response command sent to the relative RFID module 4 of the transmission source of the authentication request command in ST40. User recognition process section 25 then notifies main-control section 21 of the authentication continuation command in ST41.

This authentication response command is then radiated as a radiowave from reader/writer 5. At this moment, if the relative RFID module 4 of the transmission source of the authentication request command exists within the reachable area of the radiowave, the authentication response command is received by the relative RFID module 4. The relative RFID module 4 received the authentication response command wirelessly transmits authentication request command again.

Thereafter, every time user recognition process section 25 receives authentication request command (YES, in ST39), user recognition process section 25 reiterates to have the processes executed of transmission of the authentication response command to the relative RFID module 4 of the transmission source of the authentication request command and of notification of the authentication continuation command to main-control section 21.

If user recognition process section 25 failed to receive the authentication request command in response to the ID response command (NO, in ST36) or to receive the authentication request command in response to the authentication response command (NO, in ST39), user recognition process section 25 waits for a new ID being recognized, with the flow returning to ST31.

Main-control section 21 that has reset the operation inhibition flag in ST14 executes the process of rank-classified operations in ST15. The process procedure of the rank-classified operations will be specifically described in reference to FIG. 8. That is, main-control section 21 selects one or more operations of a rank corresponding to an authority level authorized to the corresponding user and stored in storage section 22 in ST21. A menu screen including thus selected one or more operations is generated and displayed on display 29 in ST22.

In this state, main-control section 21 waits for any one of the operations in the menus being selected by the corresponding user. During this stand-by, main-control section 21 determined if current clock time has passed the end-time stored in storage section 22 in ST24 (end-time determination section).

When any of the operations in the menus is selected before the end-time passes (YES, in ST23), main-control section 21 executes information process pertaining to the selected operation in ST25.

In this state, main-control section 21 waits for the selected operation being completed in ST26. During this stand-by, main-control section 21 determines if the authentication continuation command is constantly received from user recognition process section 25 in ST27. While this authentication continuation command is continuously received (YES, ST27), main-control section 21 executes the selected one operation. If the reception of the authentication continuation command is discontinued (NO, in ST27), main-control section 21 forcibly terminates the operation currently in execution in ST28. Then, this process of rank-classified operations terminates. With the process of rank-classified operations being terminated, the flow returns to ST4, wherein main-control section 21 sets the operation inhibition flag to inhibit inputting from the input section (use restriction section).

When the information process pertaining to one operation that was selected is completed (YES, in ST26), the flow returns to ST4, wherein main-control section 21 displays the operation menu again. Thereafter, any operation in the menu is selected, main-control section 21 executes information process pertaining to that selected operation. When the end-time passes, main-control section 21 terminates the process of this rank-classified operation. With the process of rank-classified operation terminated, the flow returns to ST4, wherein main-control section 21 sets the operation inhibition flag to inhibit inputting from the input section (use restriction section).

In this manner, each of the information-processing devices 2 stores a schedule data comprised of user ID of a user who is authorized to use respective device, user occupying time period from start-time to end-time, and authority level. When, in the state that the operation inhibition flag is set, that is, inputting from the input section is inhibited, a person carrying RFID module 4 approaches to one of information-processing devices 2 and a user ID stored in that RFID module 4 is read by reader/writer 5 of the corresponding information-processing device 2 in a non-contact manner, the user ID that was read from RFID module 4 by the reader/writer 5 is compared with any user ID associate with user occupying time of the current clock-time. If the two IDs match, the operation inhibition flag is reset. That is, the state of the input inhibition is released. As a result, the person approached to the corresponding information-processing device 2 is allowed to use the relative device so that information process pertaining to operations of one or more ranks equal to or lower than his/her authority level are executed.

If the two user IDs do not match, the operation inhibition flag is not reset. Therefore, one to whom a user ID other than the user ID having a schedule data associated with the current clock-time as his/her user occupying time is assigned is not allowed to use the corresponding information-processing device 2.

After the release of the state of the operation inhibition flag, a check is repeatedly made to see if RFID module 4 storing the relative user ID is continuously recognized by reader/writer 5. Each time when an information process pertaining to one operation is completed, a determination is made whether the user occupying time period of the schedule data relating to the relative user ID has passed. When RFID module 4 storing the relative user ID is no longer recognized by reader/writer 5 or the relative user occupying time period has passed, the operation inhibition flag is set. That is, after the user departs from the corresponding information-processing device 2 or the user occupying time period has passed, inputting from the input section is inhibited. Therefore, the use of the corresponding information-processing device 2 is not allowed.

Now, there will be described a case in which the use restricting system in this embodiment is applied, as one example, to a POS (Point Of Sales) system as constructed in a super market or the like. A POS system is generally composed of more than one POS terminal and a store controller. Each POS terminal is an information-processing device having a function of processing information relating to various kinds of operations. The various operations involve a registration operation of registering sales data of commodities that customers purchase, an account-adjustment operation of accounting sales by adding up registered commodity sales data, and a setting operation of setting data necessary to execute such registration and account-adjustment, etc. Each POS terminal is operated by a store clerk called a cashier. While a detailed work schedule is prepared for each store clerk, each store clerk enters a store check counter and deals with customers operating a POS terminal at the corresponding counter according to that work schedule.
Let it be assumed that schedule data D1 to D7 having contents shown in FIG. 3 have been previously registered in schedule database in schedule database 7.

Schedule data D1 represents that a cashier identified by user ID [100002] having authority level L1 is to use a POS terminal designated as device ID [2003] from 10:00 a.m. to 12:00 p.m.

Schedule data D2 represents that a cashier identified by user ID [100004] having authority level L2 is to use a POS terminal designated as device ID [2001] from 10:00 a.m. to 11:30 p.m.

Schedule data D3 represents that a cashier identified by user ID [100005] having authority level L1 is to use a POS terminal designated as device ID [2002] from 10:00 a.m. to 12:00 p.m.

Schedule data D4 represents that a cashier identified by user ID [100003] having authority level L3 is to use a POS terminal designated as device ID [2001] from 11:30 a.m. to 13:30 p.m.

Schedule data D5 represents that a cashier identified by user ID [100004] having authority level L2 is to use a POS terminal designated as device ID [2002] from 12:00 p.m. to 13:30 p.m.

Schedule data D6 represents that a cashier identified by user ID [100001] having authority level L1 is to use a POS terminal designated as device ID [2003] from 12:00 p.m. to 14:00 p.m.

Schedule data D7 represents that a cashier identified by user ID [100002] having authority level L1 is to use a POS terminal designated as device ID [2002] from 13:00 p.m. to 14:30 p.m.

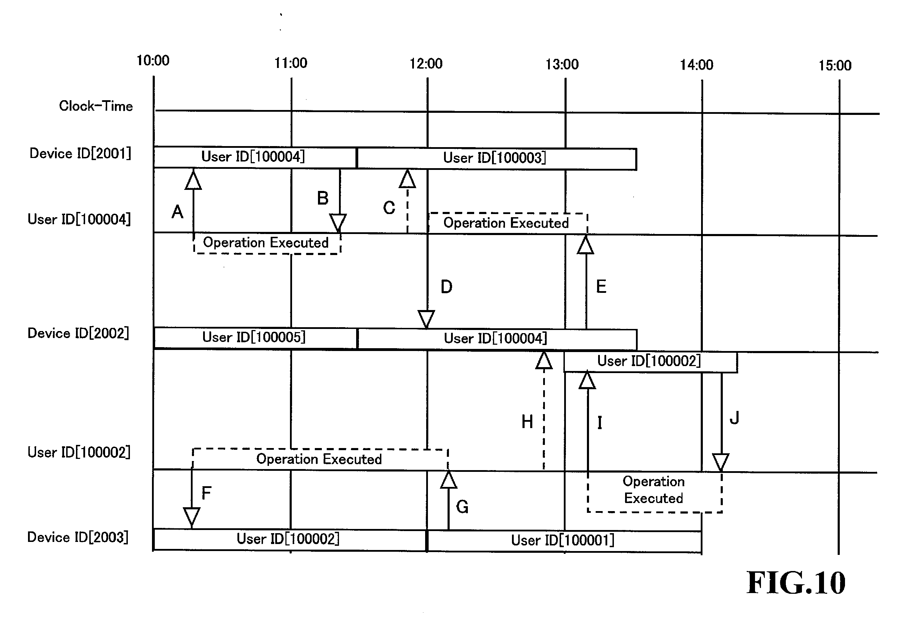

FIG. 10 is a list that is formed by rearranging these work schedule data D1 to D7 by each of the POS terminals. That is, the POS terminal designated as device ID [2001] is to be used by the authorized cashier identified by [100004] between 10:00 a.m. to 11:30 a.m., and by the authorized cashier identified by [100003] between 11:30 a.m. to 13:30 p.m. The POS terminal designated as device ID [2002] is to be used by the authorized cashier identified by [100005] between 10:00 a.m. to 12:00 p.m., also by the cashier identified by [100004] between 12:00 p.m. to 13:30 p.m., and by the authorized cashier identified by [100002] between 13:00 p.m. to 14:30 p.m. This POS terminal of device ID [2002] is to be used by two authorized cashiers identified by [100004] and [100002] between 13:00 p.m. to 13:30 p.m. The POS terminal designated as device ID [2003] is to be used by the authorized cashier identified by [100002] between 10:00 a.m. to 12:00 p.m., and by the authorized cashier identified by [100001] between 12:00 p.m. to 14:00 p.m. Schedule data D2 and D4 are delivered to the POS terminals designated as device ID [2001] from schedule management server 3. Schedule data D3, D5, and D7 are delivered to the POS terminals designated as device ID [2002]. Schedule data D1 and D6 are delivered to the POS terminals designated as device ID [2003].

Relating to such work schedules, assume that actions of a cashier identified by user ID [100004] are represented by arrows A to E. Arrow A represents that the corresponding cashier entered the wireless communication area of reader/writer 5 provided in the POS terminal designated as [2001] after 10:00 a.m. In this case, the relative POS terminal recognizes user ID [100004] of RFID module 4 carried by the corresponding cahier. In this POS terminal, schedule data D2 having a user occupying time period between 10:00 a.m. and 11:30 a.m. is valid. Because the user ID of schedule data D2 is [100004], the two IDs match. Therefore, in this POS terminal the operation inhibition flag is reset, that is, inputting from the input section is enabled. The operation menu is then displayed.

Now, let respective ranks of the registration operation, the account-adjustment operation, and the setting operation be 1, 2, 3, respectively. Since the authority level of this cashier is 2, the operation menus for the registration operation and the account-adjustment operation are displayed in the POS terminal designated as [2001] . That is, this cashier is allowed to perform an information process pertaining to either operation of the registration operation or the account-adjustment operation in the menu. Herein, the higher the level of the authority is granted to the user, the more operations or more responsible operations such a user is allowed to perform.

Arrow B represents that the corresponding cashier exited from the wireless communication area of reader/writer 5 provided in the POS terminal designated as [2001] before 11:30 a.m. Then, since the authentication continuation command is discontinued, the operation inhibition flag is set. That is, inputting from the input section is inhibited.

Arrow C represents that the cashier having user ID [100004] entered again the wireless communication area of reader/writer 5 provided in the POS terminal designated as [2001] after 11:30 a.m. In this case, the relative POS terminal recognizes user ID [100004] of RFID module 4 carried by the corresponding cahier. In this POS terminal, schedule data D4 in which a user occupying time period between 11:30 a.m. and 13:30 p.m. is valid. On the other hand, the user ID of this schedule data D4 is [100003]. Therefore, the two IDs mismatch. Accordingly, in this POS terminal, the operation inhibition flag remains to be set, and the state of input inhibition continues.

Arrow D represents that the cashier of [100004] entered the wireless communication area of reader/writer 5 provided in the POS terminal designated as [2002] at 12:00 p.m. In this case, the relative POS terminal recognizes user ID [100004] of RFID module 4 carried by the corresponding cahier. In this POS terminal, schedule data D5 in which a user occupying time period between 12:00 a.m. and 13:30 p.m. is valid. Because the user ID of schedule data D5 is [100004], the two IDs match. Therefore, in this POS terminal the operation inhibition flag is reset, that is, inputting from the input section is enabled. The operation menu is then displayed. In this case also, since the operation menu displays the registration operation and the account-adjustment operation, the corresponding cashier performs information processing of either of the two operations.

Arrow E represents that the corresponding cashier exited from the wireless communication area of reader/writer 5 provided in the POS terminal designated as [2002] before 13:30 p.m. In this case, since the authentication continuation command of user ID [100004] is discontinued, the operation inhibition flag is set. That is, inputting from the input section is inhibited.

Now, turning to another cashier, assume that actions of a cashier identified by user ID [100002] are represented by arrows F to J. Arrow F represents that this cashier having user ID [100002] entered the wireless communication area of reader/writer 5 provided in the POS terminal designated as [2003] after 10:00 a.m. In this case, the relative POS terminal recognizes user ID [100002] of RFID module 4 carried by the corresponding cahier. In this POS terminal, schedule data D1 in which a user occupying time period between 10:00 a.m. and 12:00 p.m. is valid. Because the user ID of schedule data D1 is [100002], the two IDs match. Therefore, in this POS terminal the operation inhibition flag is reset, that is, inputting from the input section is enabled. The operation menu is then displayed. Since the authority level of the corresponding cashier is 1, only the registration menu is displayed. That is, the cashier is allowed to perform information processing pertaining to the registration operation.

Arrow G represents that the cashier having user ID [100002] continued his/her operation past the scheduled end-time of 12:00 p.m. Because the end-time of this schedule data D1 has elapsed, the operation inhibition flag in the relative POS terminal is set at an appropriate point of the operation. That is, inputting from the input section is inhibited.

Arrow H represents that the cashier having user ID [100002] entered the wireless communication area of reader/writer 5 provided in the POS terminal designated as [2002] before 13:00 p.m. In this case, the relative POS terminal recognizes user ID [100002] of RFID module 4 carried by the corresponding cahier. In this POS terminal, schedule data D5 in which a user occupying time period between 12:00 p.m. and 13:30 p.m. is valid. On the other hand, the user ID of this schedule data D4 is [100004]. Therefore, the IDs mismatch. Accordingly, in this POS terminal, the operation inhibition flag is set, entering the state of input inhibition. This is a measure taken in view of security because which one of the cashiers presently operating is unknown.

Arrow I represents that the corresponding cashier the cashier having user ID [100002] reentered the wireless communication area of reader/writer 5 provided in the POS terminal designated as [2002] after 13:00 p.m. In this case, the relative POS terminal recognizes user ID [100002] of RFID module 4 carried by the cahier. In this POS terminal, both schedule data D5 in which a user occupying time period between 12:00 p.m. and 13:30 p.m. and schedule data D7 in which a user occupying time period between 13:00 p.m. and 14:30 p.m. are valid. Because the user ID of schedule data D7 is [100002], the two IDs match. Therefore, in this POS terminal the operation inhibition flag is reset, that is, inputting from the input section is enabled. The operation menu is then displayed. In this case also, since the registration menu is displayed, the corresponding cashier performs information process pertaining to the registration operation.

Arrow J represents that the cashier having user ID [100004] exited from the wireless communication area of reader/writer 5 provided in the POS terminal designated as [2002] before 14:30 p.m. In this case, since the authentication continuation command of user ID [100002] is discontinued, the operation inhibition flag is set. That is, inputting from the input section is inhibited.

Thus, according to the present invention, the state of the operation inhibition flag of the information-processing device 2 cannot be released on the condition that a person carrying RFID module 4 with a user ID being set in it only enters the wireless communication area of reader/writer 5 provided in that information-processing device 2.

The state of the input inhibition can be released only when a person carrying RFID module 4 having a "user ID valid in a user occupying time period including the current clock-time" stored in the relative information-processing device 2 as its schedule data enters the wireless communication area of reader/writer 5. That is, only user who corresponds to a previously registered schedule data is allowed to use the relative information-processing device 2. Therefore, use of the device by a person, e.g. one illegally acquired RFID module 4 can be excluded at a high probability. Illegal use of the device by a person who legitimately owns RFID module 4 can be also prevented before occurring.

### [Second Embodiment]

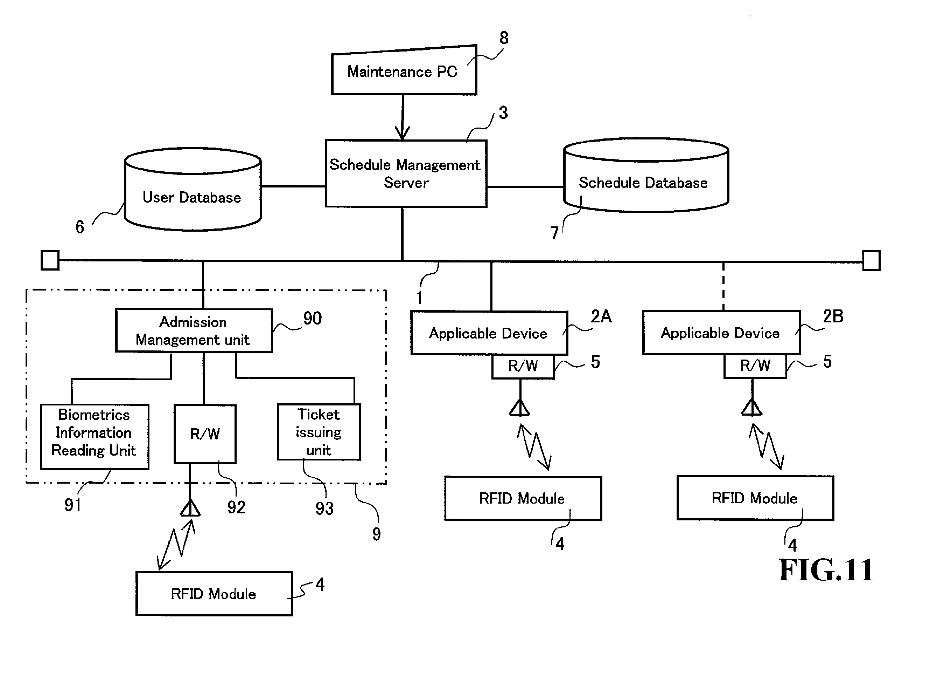

The second embodiment is an example based on another aspect of the present invention. FIG. 11 is an overall view of a system according to this embodiment. An information-processing device 2A, a schedule management server 3, an admission management unit 90 of an admission management system 9 are interconnected via communication line 1. An information-processing device 2B is a standalone PC that is not connected to communication line.

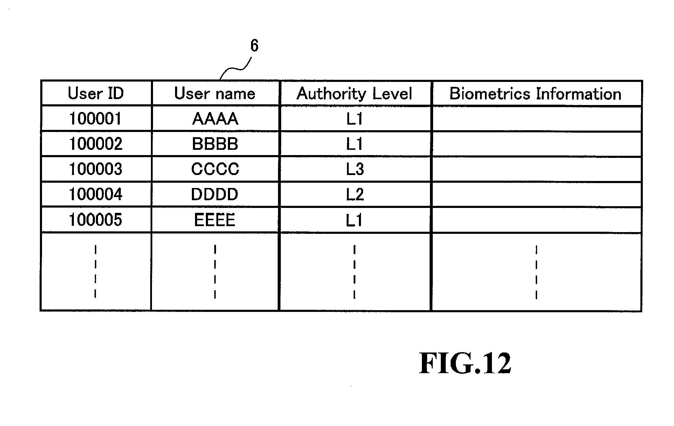

Schedule management server 3 controls a user database 6 (user DB6) and a schedule database 7 (schedule DB7). Schedule database 7 is identical to one in the first embodiment. Referring to FIG. 12, there are registered in user database 6 a user data comprised of user IDs, user names, authority levels, and biometrics information. The biometrics information uses a finger pattern. User database 6 functions also as biometrics information database. The biometrics information is not limited to a fingerprint, but may include bodily characteristics such as palm pattern, handprint, veins on the back of the hand, iris, face, and voice, and calligraphy and keying.

Admission management system 9 controls admission to a facility where information-processing devices 2 are provided, and is comprised of an admission management unit 90, a biometrics information reading unit 91, a wireless reader/write unit 92, and ticket issuing unit 93. Biometrics information reading unit 91, reader/write unit 92, and ticket issuing unit 93 are each connected to admission management unit 90.

Biometrics information reading unit 91 reads out a fingerprint of biometrics information of a visitor to the facility. Reader/write unit 92 functions as a wireless communication means, and is provided at the entrance of the facility. The description for reader/write unit 92 will be made later.

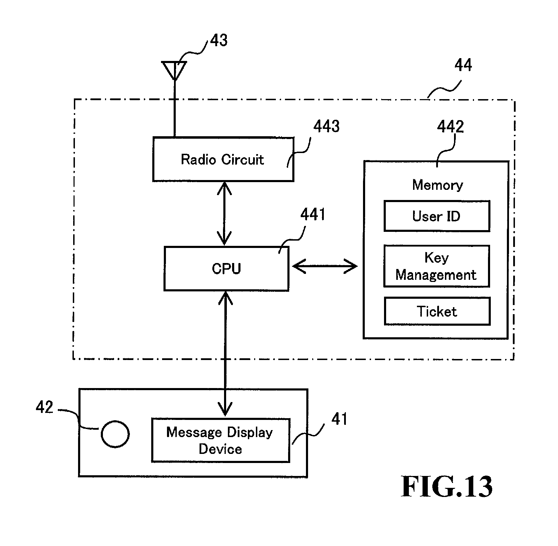

In this embodiment also, RFID module 4 is formed so as to be carried by users at all times, for example, as a nameplate. The external view is similar to that in the first embodiment as illustrated in FIG. 4. As to its hardware structure, its main body 40 incorporates, as illustrated in FIG. 13, an antenna 43, an IC chip 44, a message display device 41, and a LED display device 42. IC chip 44 implements a CPU 441, a nonvolatile memory 442, and a radio circuit 443. There are allocated within memory 442 a user ID area storing a user-specific ID, a key management area storing an encryption key and a decryption key, and an electronic ticket information storage area.

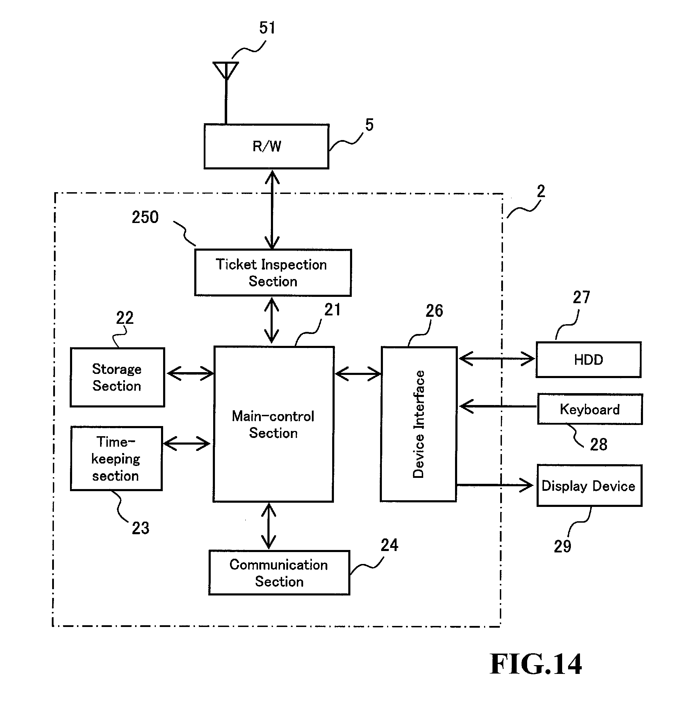

Each of information-processing devices 2 (2A, 2B, ..) has the basically like structure, whose block diagram is illustrated in FIG. 14. As becomes apparent when compared with one in the first embodiment shown in FIG. 6, information-processing device 2 in the second embodiment is provided with a ticket inspection section 250 in place of the user recognition process section 25.

Referring to FIG. 11, information-processing device 2A is connected to LAN 1 via a communication section 24, while information-processing device 2B is not connected to LAN 1. Information processing device 2A data-communicates with schedule management server 3 that is also connected to LAN 1. On the other hand, information-processing device 2B may be served also as a standalone PC not necessary to be connected to LAN 1.

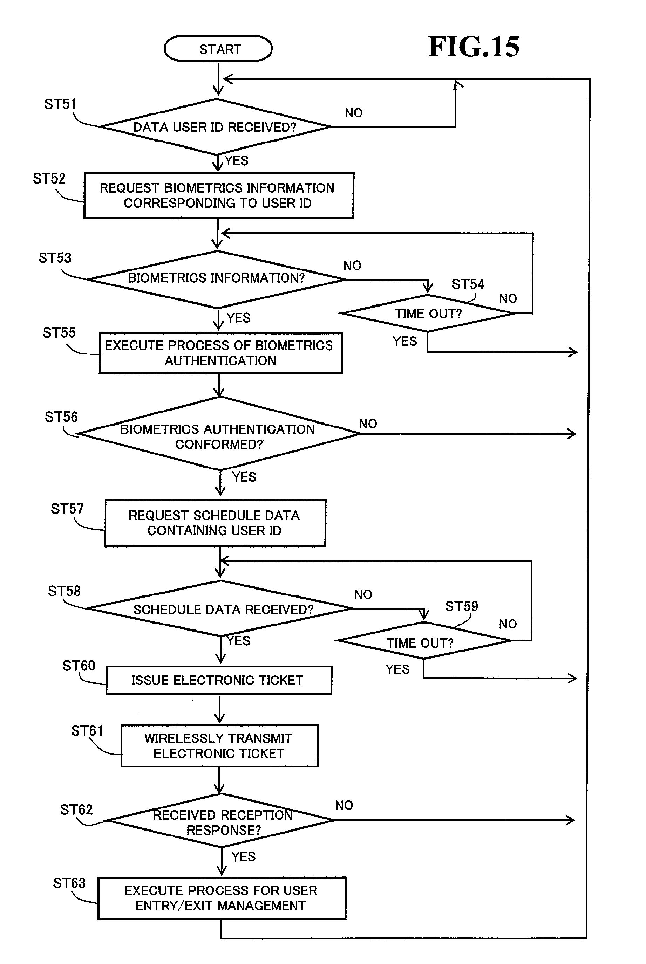

FIG. 15 is a flowchart illustrating the main operation procedure of admission management unit 90. Upon initiation its operation, admission management unit 90 waits for reception of a user ID stored in RFID module 4 in ST51. When an admission expectant carrying RFID module 4 approaches to the entrance of the facility, the user ID stored in memory 442 of the relative RFID module 4 is read out by reader/write unit 92 in a non-contact manner. The user ID read by reader/write unit 92 is sent to admission management unit 90.

Upon receipt of the user ID read by reader/write unit 92 (YES, in ST51), admission management unit 90 requests biometrics information of the user identified by that user ID to schedule management server 3 connected thereto via LAN 1 in ST52 (biometrics information acquisition section). Schedule management server 3, which received this request command, searches user database 6 to read out a user name, an authority level, and biometrics information of user data stored associated with the corresponding user ID. These user name, an authority level, and biometrics information that were read out are sent to admission management unit 90 via LAN 1.

The admission management apparatus that requested biometrics information waits for the biometrics information being received in ST 53, or in ST 54. If the biometrics information is not received within a predetermined time (YES, in ST54), the flow returns ST51, wherein admission management unit 90 waits for a subsequent user ID being received.

Upon receipt of a user name, an authority level, and biometrics information from schedule management server 3 (YES, in ST53), admission management unit 90 executes biometrics authentication process in ST55. That is, a determination is made for conformity of the biometrics information read by biometrics information reading unit 91 to the biometrics information received from schedule management server 3(biometrics information collation section). When nonconformity of the two is determined (NO, in ST56) as a result, the flow returns to ST51, wherein admission management unit 90 waits for a subsequent user ID being received. This event possibly occurs when RFID module 4 is carried by a person other than the legitimate person.

When RFID module 4 is carried by the legitimate person, the two pieces of the biometrics information match. If the two match (YES, in ST56), admission management unit 90 requests schedule management server 3 for a schedule data including the corresponding user ID in ST57 (schedule request section). Then, schedule management server 3 searches schedule database 7 with that requested user ID as a key to extract all the schedule data containing the corresponding ID. The extracted schedule data is delivered to admission management unit 90 via LAN1 (schedule delivery section).

Admission management apparatus 90 requested the schedule data waits for the schedule data being delivered thereto in ST58 or in ST59. If the schedule data is not delivered thereto within a predetermined time (YES, in ST59), the flow returns ST51, wherein admission management unit 90 waits for a subsequent user ID being received. This event occurs, for example, when a schedule data containing the user ID of the admission expectant is not registered in schedule database 7. This means that an admission expectant whose schedule data is not registered in schedule database 7 is not allowed to enter the facility even if he or she carries a legitimate RFID module 4.

If the schedule data is delivered (YES, in ST58), admission management unit 90 transmits this schedule data to ticket issuing unit 93 and instructs the unit to issue an electronic ticket in ST60.

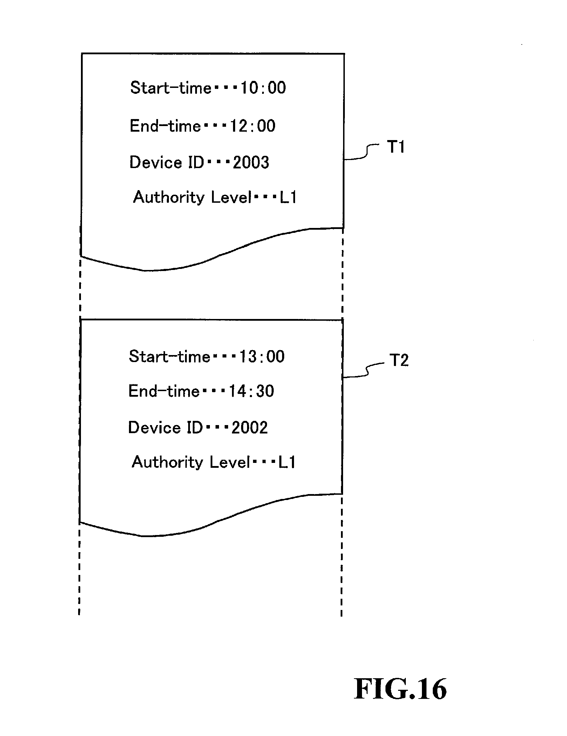

Receiving this instruction, ticket issuing unit 93 generates electronic ticket information T1, T2, ... , as illustrated in FIG. 16, in which a start-time , a device ID, and an authority level are electronically recorded for each schedule data item. The generated electronic tickets are sent to admission management unit 90 (ticket issuing unit).

Admission management unit 90 wirelessly communicates with RFID module 4 in which the corresponding user ID is recorded through reader/write unit 92 and has electronic ticket information T1, T2, ... written in memory 442 of the RFID module 4 in a non-contact manner in ST61 (ticket information writing section).

Then, a receipt response signal is transmitted from the relative RFID module 4 in which electronic ticket information T1, T2, ... is legitimately written in memory 442. Having received the receipt response signal, admission management unit 90 executes the admission management process. The admission management process includes to release the lock of the facility entrance and to record a user name identified by the corresponding user ID and an entry time. Then, the flow returns to ST51 and admission management unit 90 waits for a subsequent user ID being received.

In this structure, the admission expectant whose schedule data is registered in schedule database 7 performs the biometrics authentication at the facility entrance. With the admission permitted, the electronic ticket information T1, T2, ... according to user's own schedule data is written in RFID module 4 carried by this admission expectant. With completion of this writing of electronic ticket information T1, T2, ... , the admission (of the admission expectant) to the facility is enabled.

The user who entered the facility approaches to information-processing devices 2A or 2B that the user expects to use. Information processing devices 2A, 2B are provided with reader/writer unit 5. When the user enters the wireless communication area of the relative RFID module 4, a response radiowave containing the user ID is transmitted from RFID module 4 carried by the relative user. This response radiowave is received by antenna 51 of reader/writer 5. Reader/writer unit 5 reads out the user ID from the response radiowave and transmits it to ticket examination section 250.

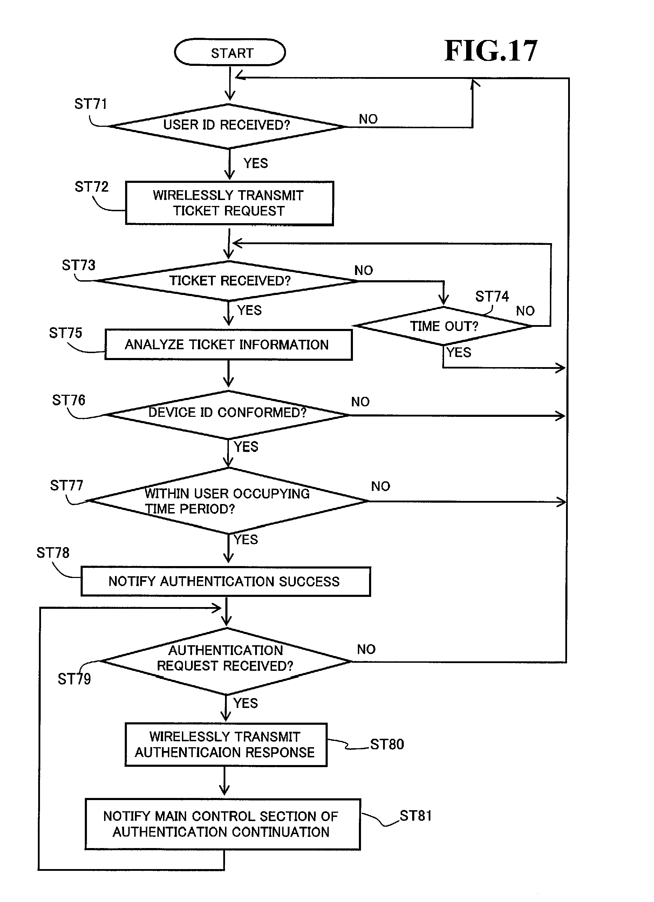

Ticket examination section 250 waits for the user ID being received in ST71, as illustrated in the flowchart of FIG. 17. Upon receipt of the user ID through reader/writer unit 5, ticket examination section 250 sends an electronic ticket request command containing that user ID to reader/writer unit 5. This command is then wirelessly transmitted from antenna 51 of reader/writer unit 5.

The above electronic ticket request command is received by the corresponding RFID module 4 storing the user ID contained in this command. Then, the relative RFID received this command transmits a response radiowave containing electronic ticket information T1, T2, ... that is written in memory 442. This response radiowave is received by antenna 51 of reader/writer unit 5. Reader/writer unit 5 reads out electronic ticket information T1, T2, ... from this response radiowave to send it to ticket examination section 250.

Ticket examination section 250 waits for electronic ticket information T1, T2, .. being received (ticket acquisition section). If this electronic ticket information T1, T2, .. is not received within a predetermined time (YES, in ST74), the flow returns to ST71, wherein ticket examination section 250 waits for a subsequent user ID being received. This event possibly occurs when, for example, the user departs from the relative wireless communication area.

When received electronic ticket information T1, T2, .. (YES, ST73), ticket examination section 250 analyzes electronic ticket information T1, T2, ... Then, a determination is made whether the device ID that is assigned to the device itself exists in the recorded electronic ticket information or not in ST76, and whether, if it exists (YES, in ST76), the current clock-time is included in the user occupying time period having the start-time to end-time as specified in the electronic ticket information in ST77. The device ID is stored in storage section 22 of each of the information-processing devices 22. The current clock-time is kept in time-keeping section 23 of each of the information-processing devices 22. Ticket examination section 250 acquires the relative device ID and the current-clock-time through main-control section 21, which are then used to analyze electronic ticket information T1, T2, ... As an alternative, the information on the device ID and the current clock-time may be acquired by directly connecting storage section 22 and time-keeping section 23 to ticket examination section 250 without the intervention of main-control section 21.

If the electronic ticket information that records the device ID assigned to the device itself does not exist (NO, in ST76), or if the current clock time is not included in the user occupying time period having the start-time to end-time (NO, in ST77), then the flow returns to ST71 and ticket examination section 250 waits for a subsequent user ID being received. This event possibly occurs when the user approaches to an information-processing device 2 other than one that the user expects to use, or the user approaches to the information-processing device 2 at a time out of the scheduled user occupying time period.

If the electronic ticket information that records the device ID assigned to the device itself exists (YES, in ST76), and if the current clock time is included in the user occupying time period having the start-time to end-time (YES, in ST77), then ticket examination section 250 notifies the main-control section 22 of the authentication success command in ST78. This authentication success command contains the end-time and authority level of the corresponding electronic ticket information.

Meanwhile, RFID module 4 that transmitted electronic ticket information T1, T2, ... further transmits the authentication request command. Ticket examination section 250 determines whether it has received the authentication request command from RFID module 4 in ST 79. Upon receipt of the authentication request command through reader/writer unit 5 (YES, in ST79), ticket examination section 250 has the authentication response command wirelessly transmitted to RFID module 4 of transmission source of the authentication request command in ST 80. Ticket examination section 250 also notifies main-control section 21 of the authentication continuation command in ST81.

The authentication response command is wirelessly transmitted as a radiowave from reader/writer unit 5. At this moment, if RFID module 4 of the transmission source of the authentication request command exists within the reachable area of the radiowave, the authentication response command is received by the corresponding RFID module 4. The corresponding RFID module 4 received that authentication response command wirelessly transmits the authentication request command to the relative information-processing device 2 again.

Thereafter, every time ticket examination section 250 receives the authentication request command from the relative RFID module 4 (YES, ST79), it reiterates to have executed the process of wirelessly transmitting the authentication response command to RFID module 4 of the transmission source of the authentication request command and the process of the notification of the authentication continuation command to main-control section 21.

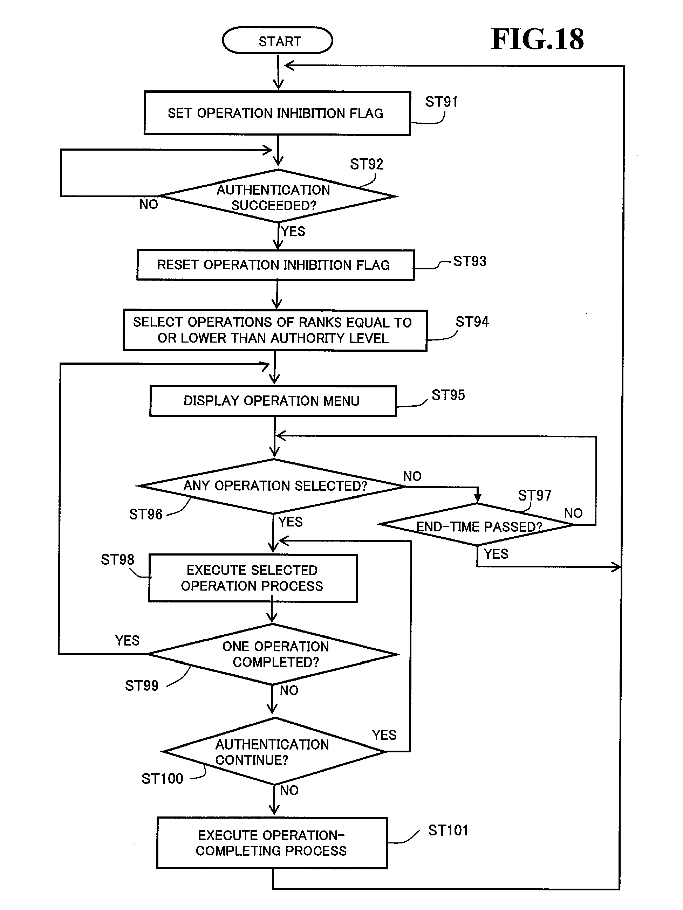

Incidentally, when information-processing device 2 is initiated, main-control section 21 commences the operations in the process procedure illustrated in the flowchart of FIG. 18. First, main-control section 21 sets the operation inhibition flag in ST 91. In this embodiment also, when the operation inhibition flag is set, main-control section 21 inhibits inputting from the input section including a keyboard 28, a pointing device, a scanner, a touch-panel among peripheral devices connected to device interface 26 (input inhibition section).

In this state, main-control section 21 waits for authentication success command being notified from ticket examination section 250 in ST92. Having being notified of the authentication success command from ticket examination section 250, main-control section 21 resets the operation inhibition flag in ST 93. As a result, the state of inputting inhibition from the input section including keyboard 28, pointing device, scanner, and touch-panel is released (use-authorization section).

After the reset of the operation inhibition flag, main-control section 21 selects one or more operations of ranks equal to, or lower than the authority level contained in the authentication success command in ST94. Then, main-control section 21 generates a menu screen of these selected operations to be displayed on the display 29 in ST95.

In this state, main-control section 21 waits for any one of the operations in the menu being selected in ST96. During this stand-by period, main-control section 21 determines if the current clock-time passes the end-time contained in the authentication success command in ST97 (end-time determining section).

If any one of the operations in the menu has been selected before the end-time passes (YES, in ST96), main-control section 21 executes the selected operation in ST98. That is, main-control section 21 processes information inputted through the input section.

Main-control section 21 waits for completion of the one operation that was selected in ST99. During this stand-by period, main-control section 21 determines if main-control section 21 periodically receives the authentication continuation command from ticket examination section 250 in ST100. While the authentication continuation command is being received (YES, ST100), the selected operation is executed. If the authentication continuation command is discontinued during the execution of the operation (NO, ST100), main-control section 21 forces the operation currently being executed to end in ST101. Then, the flow returning to ST91, the operation flag is set and inputting from the input section is inhibited (use restriction section).

When one operation that was selected is completed (YES, in ST99), the flow returns to ST95, wherein main-control section 21 displays the operation menu again. Thereafter, when any other operation in the menu is selected, main-control section 21 executes the selected operation. If the corresponding end-time passes, the flow returns to ST91, wherein main-control section 21 sets the operation inhibition flag, inhibiting inputting from the input section (use restriction section)

Thus, in the second embodiment, even the user carrying RFID module 4 to which a user ID is allocated cannot necessarily be admitted to the facility where information-processing device 2 is installed. One who allowed to enter there is only users whose schedule that reserves use of any one of information-processing devices 2 is registered.

In addition, even when the user enters the facility area, that user cannot always use all of the information-processing devices 2 provided in the facility area. The device that the user allowed to use is only one whose device ID is registered in the schedule data. Furthermore, the time allowed to use the device is limited to the user occupying time period registered in the schedule data. Therefore, as in the first embodiment, the use by any person illegally acquired RFID module 4 can be excluded at a high probability. Moreover, the illegal use of the user who legitimately carries RFID module 4 can also be prevented.

In this second embodiment, information-processing device 2 only needs to confirm electronic ticket information T1, T2, .. that is stored in RFID module 4. Therefore, the load incurred for the authentication process can be alleviated compared to the way carried out in the first embodiment. As a result, a device having a low capability of processing can be used as an information-processing device. Since such a device is not necessarily connected to the server, use of a single information-processing device such as a standalone PC can be surely restricted.

This invention is not limited to the way implemented in the embodiments as described above. For example, in this embodiment, the description was made using a passive type of an RFID module as an example. However, an active type of an RFID module may as well be used.

In the second embodiment, the personal authentication for the user carrying an RFID module is carried by using biometrics information. However, the method of such a user authentication is not limited to this. For example, the authentication may be carried out by having the user input a password.

Numerous modifications and variations of the present invention are possible in light of the above teachings. It is therefore to be understood that, within the scope of the appended claims, the present invention can be practiced in a manner other than as specifically described therein.

## Claims

1. An information-processing device having an input section for processing information inputted through the input section, comprising:
an input inhibition section inhibiting inputting from the input section;
a schedule storage section storing schedule information including a user-specific ID for a user and user occupying time period authorized to the user;
a wireless communication section communicating with an RFID module that is carried by each of the users and transmits the user-specific ID;
a time-keeping section recording a current clock-time;
a user ID acquisition section acquiring from the schedule storage section the user-specific ID associated with the user occupying time period including the current clock time recorded by the time-keeping section;
an ID collation section, upon receipt of an ID from the RFID module by the wireless communication section, for collating the received ID with the user-specific ID acquired by the user ID acquisition section; and
a use authorization section releasing the inputting inhibition as the result of the collation by the ID collation section.

2. The information-processing device according to claim 1, further comprising a user restricting section, while the inputting inhibition is released by the use authorization section, for recognizing an ID received from the RFID module through the wireless communication section and effecting the inputting inhibition by the input inhibition section when the ID acquired by user ID acquisition section is no longer recognized.

3. The information-processing device according to claim 1 or 2, further comprising:
an end-time determining section determining if the user occupying time period authorized to the user associated with the ID acquired by the user ID acquisition section has passed every time an information process for one operation is completed, while the inputting inhibition is released by the use authorization section; and
a use restriction section effecting the input inhibition by the input inhibition section if a determination is made by the end-time determining section that the user occupying time period has passed.

4. The information-processing device according to any one of claims 1 to 3, wherein the information-processing device is a POS terminal.

5. The information-processing device according to any one of claims 1 to 4, wherein the RFID module is provided with a display device.

6. An information-processing device having an input section for processing information inputted through the input section, comprising:
an input inhibition section inhibiting inputting from the input section;
a wireless communication section communicating with an RFID module that is carried by each of the users and transmits information on an electronic ticket on which a user occupying time period authorized to the user is recorded;
a time-keeping section recording a current clock-time;
a ticket acquisition section wirelessly communicating with the RFID module through the wireless communication section to acquire the information of the electronic ticket stored in the RFID module;
a use authorization section releasing the inputting inhibition when the clock-time recorded by the time-keeping section is included within the user occupying time period of the electronic ticket information acquired by the ticket acquisition section.

7. The information-processing device according to claim 6, further comprising a use restriction section, while the inputting inhibition is released by the use authorization section, for monitoring a state of the communications with the RFID module and effecting the inputting inhibition by the input inhibition section if the communications are discontinued.

8. The information-processing device according to claim 6 or 7, further comprising:
an end-time determining section determining if the user occupying time period of the information of the electronic ticket acquired by ticket acquisition section has passed every time an information process of one operation is completed, while the inputting inhibition is released by use authorization section; and
a use restricting section effecting the inputting inhibition by the input inhibition section if a determination is made by the end-time determining section that the user occupying time period has passed.

9. The information-processing device according to any one of claims 6 to 8, wherein the information-processing device is a POS terminal.

10. The information-processing device according to any one of claims 6 to 9, wherein the RFID module is provided with a display device.
